# EUROPEAN PATENT APPLICATION

(11) **EP 2 095 790 A1**
(43) Date of publication of application: **02.09.2009**
(21) Application number: 08014270.6
(22) Date of filing: 11.08.2008
(51) Int. Cl.: A61C 8/00

(54) **Bio-compatible device for dental bone implantation for anatomical restoration**

(30) Priority: 28.02.2008 IT TO20080146
(71) Applicant: Gastaldi, Eugenio, 10132 Torino (IT)
(72) Inventor: Gastaldi, Eugenio, 10132 Torino (IT)
(74) Representative: Lotti, Giorgio

(57) **Abstract**

A bio-compatible device (1) for dental bone implantation for anatomical restoration, and a corresponding method. The device (1) is designed to be inserted in a dental alveolus located on a mandibular or maxillar bone. The device is provided with a distal part (2), a substantially cylindrical central body (4) and a mesial part (3), transverse grooves (5a) and one or more longitudinal notches (7) for bone reconstruction developing substantially in a direction of maximum length of the device (1). The transverse grooves (5a) are separated from one another by a plurality of bone-fragmenting teeth (5). The device (1) is implanted, in use, inside the dental alveolus and is subsequently rotated; the bone-fragmenting teeth (5) are designed to fragment part of the mandibular or maxillar bone.

## Description

The present invention relates to a device for bone implantation, in particular to a bio-compatible device for dental bone implantation for anatomical restoration, and to a corresponding method.

There are known devices for dental bone implantation for anatomical restoration designed to enable reconstruction of the morphology of an extracted or missing tooth.

Said devices usually have a screw, the thread of which develops on a substantially cylindrical or wedge-shaped structure with a distal part of reduced diameter with respect to a mesial part, i.e., the one closest to the median line of the dental arch.

At the mesial end, the known devices have means designed to enable reconstruction of the extracted or missing tooth.

Said devices are usually inserted within the hollow alveolus left by the extracted or missing tooth and fixed therein - for example by means of screwing - so as to develop a friction with the bone tissue, in order to remain as fixed as possible, without the possibility of either rotary or transverse movement.

After insertion of the device in the alveolus, which is obviously done under anaesthesia and so that the gum covers it for the most part, a provisional tooth is fixed thereto using known techniques. There then starts a biological process called bone regeneration, i.e., a process in which the cells "invade" the metal, and the device is englobed completely. Said process can last up to 3 - 6 months.

Likewise known, for example from the document No. US 5,759,034, are implantation systems for the anatomical dental restoration of front and back teeth, designed to be inserted within the hollow alveolus of the tooth by means of pressure. In this case, the implantation system is substantially shaped like a truncated cone with a furrow extending in the direction of maximum length of the implantation system, which is designed to enable regrowth within it of bone tissue; the system described in the document No. US 5,759,034 does not have a threaded structure, but a plurality of transverse annular grooves, within which the bone callus that is to guarantee gripping of the implant itself is to form.

The latter devices present certain drawbacks. In fact, gripping of the implantation system is a function only of the rate and capacity of bone formation of the maxillar or mandibular bone of the patient on which they are used. This, in particular for elderly patients or in any case ones having a reduced capacity for bone formation, causes a non-negligible lengthening of the time for stabilization of the implant, with a considerable risk of detachment of the implant itself either of a sudden nature or following upon a particular mechanical stress.

The most direct consequence is hence that of a considerable time for post-operative restabilization, which causes numerous problems as regards for the patients in terms of alimentation; however, there may arise cases in which a second surgical intervention of implantation is necessary, designed to reinsert or stabilize the device again.

The purpose of the present invention is to provide a bio-compatible device for dental bone implantation for anatomical restoration, which will be free from the drawbacks described above, as well as to provide the corresponding method.

According to the present invention, a bio-compatible device for dental bone implantation is provided for anatomical restoration and a corresponding method as claimed, respectively, in Claims 1 and 10.

The invention will now be described with reference to the annexed plates of drawings, which illustrate a non-limiting example of embodiment thereof, and in which:
- Figure 1 illustrates a three-dimensional view of a device according to the present invention;
- Figure 2 is a cross-sectional view of the device of Figure 1;
- Figure 3 is a further three-dimensional view of the device of Figure 1; and
- Figure 4 is a side view in cross section of a part of the device of Figure 1.

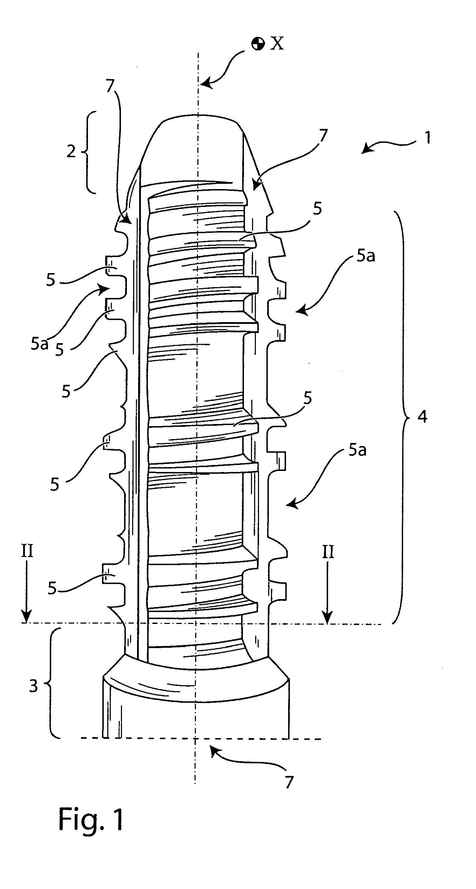

With reference to Figure 1, designated as a whole by 1 is the biocompatible device for dental bone implantation for anatomical restoration.

The device 1 is made of a biocompatible metal material (for example, titanium), which enables problems of allergical crises or toxicity following upon implantation to be overcome, and is implanted within a free dental alveolus on the mandible or on the maxilla.

In detail, the device 1 has a distal part 2 of a substantially conical shape, which is designed to penetrate into the deepest part of the dental alveolus, and a mesial part 3, set at the opposite end of the device 1 designed to come out partially from the dental alveolus; the mesial part 3 is moreover designed to house the reconstruction of the missing tooth.

The distal part 2 can be tapered with a pointed shape or else present a rounded shape.

The device 1 moreover has a central body 4, of a substantially cylindrical shape, which extends between the mesial part 3 and the distal part 2 and has a maximum diameter, the size of which is equal to the maximum diameter of the distal part.

The central body 4 of the device 1 has a plurality of bone-fragmenting teeth 5, which are, for example. rectangular or triangular or skew in shape and which define a plurality of transverse grooves 5a where the central body 4 has a diameter smaller than the maximum diameter.

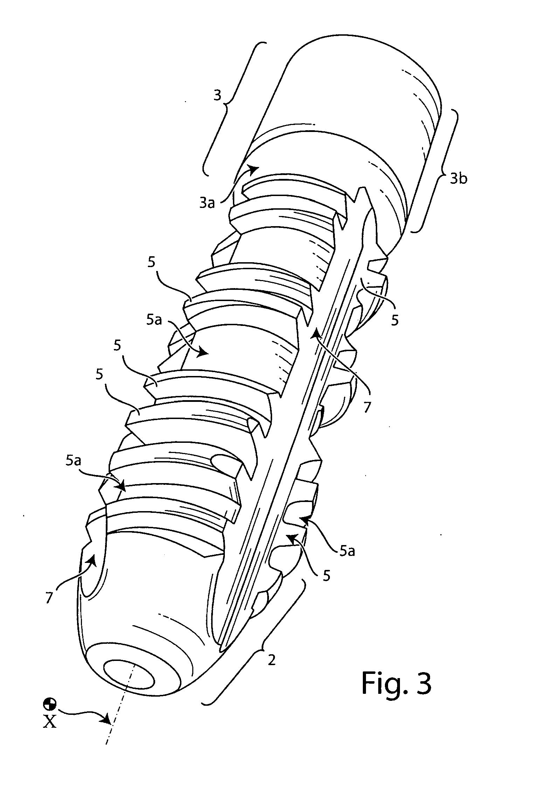

The bone-fragmenting teeth 5 extend towards the outside of the device 1 in a more or less marked way. Even though in Figures 1 and 3 an embodiment is shown in which the teeth 5 do not extend in a uniform way towards the outside, it is in any case possible to make the device 1 with bone-fragmenting teeth 5 of a uniform size.

As is shown in Figures 1 and 3, the bone-fragmenting teeth 5 are oriented in such a way as not to be orthogonal to an axis X of the device 1 set in its direction of maximum length. The configuration of the teeth 5 shown in the figures is designed to favour a penetration to a greater depth of the device during rotation.

The plurality of bone-fragmenting teeth 5 extends on one or more circular sectors 6 of the central body 4, according to the surgical requirements dictated, for example, by the strength of the bone or by the size of the device 1.

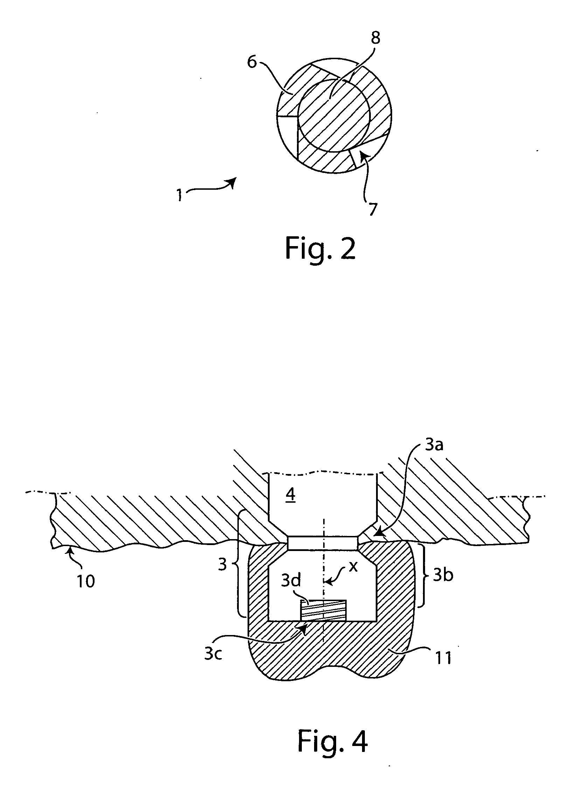

Figure 2 shows an embodiment of the device 1 along the line II-II, present in which are three circular sectors 6 provided with bone-fragmenting teeth 5.

As is shown in Figure 3, the circular sectors 6 are separated from one another by a respective longitudinal notch 7, which extends basically throughout the central body 4 and delimits the teeth 5 themselves in their angular development.

Consequently, the central body 4 of the device 1 has an internal area 8, which has a diameter smaller than the diameter of the central body 4, does not have the longitudinal notches 7 or the transverse grooves 5a, and is designed to guarantee the necessary strength of the device 1.

The mesial area 3 finally comprises a neck 3a that substantially separates the part of device 1 designed to remain, in use, in an endo-osteal position from the part 3b of the mesial area 3 designed to extend in use on the outside of a peri-osteal line 10, visible in Figure 4.

In detail, Figure 4 illustrates a cross section of the device 1 substantially corresponding to the mesial area 3. It may be noted that the mesial area 3 comprises a planar surface 3c carrying within it notches 3d of various types (for example - but not only - of a torx type, a hexagonal type, or again a threading for a screw) designed to enable insertion of instruments for rotation of the device 1 and to enable fixing of a reconstructed tooth 11.

In use, the device 1 must first be implanted within the hollow dental alveolus and then be rotated typically through a few tens of degrees.

During said rotation, the bone-fragmenting teeth 5 of the device 1 fragment locally the part of mandibular or maxillar bone bordering on them and send the fragments of bone within the transverse grooves 5a and in the longitudinal notch 7.

In this way, the post-operative stabilization of the device 1 is considerably accelerated given that the detritus of bone broken by the bone-fragmenting teeth 5 of the device 1 fill at least partially the transverse grooves 5a and the longitudinal notch 7, thus reducing the volume that has to be filled by the bone callus. In this way, in fact, the bone detritus forms a kind of material for filling the cavities, with which the non-broken part of bone is fully compatible and hence favoured for development of the bone callus necessary for maintaining the device 1 stable.

Given that bone generation within the transverse grooves 5a and the longitudinal notch 7 is facilitated, this enables the patient to resume normal alimentation in a considerably accelerated way as compared to the case where traditional devices are used.

Once again during positioning, it is necessary to take care not to rotate the device 1 excessively so as not to remove an excessive amount of bone. In general, however, an angle of rotation of the device 1 is a function of the dimension itself of the device, the number of teeth, and the consistency of the bone.

At this point, in a part 3b of the mesial area 3 extending in use on the outside of a peri-osteal line 10 it is possible to carry out the anatomical reconstruction of the missing tooth 11.

The advantages of the device so far described emerge clearly from the present description. In particular, the device 1 enables a post-operative bone regeneration that is considerably accelerated as compared to traditional-implantation prosthetic devices given that rotation of the device enables partial fragmentation of the part of bone bordering upon the bone-fragmenting teeth 5 in such a way as to deposit the detritus thereof in the grooves.

A number of variations can be made to the device so far described. For instance, the shape of the tip as likewise the shape of the neck may differ from the one illustrated; in particular, the tip can have a prismatic shape in turn designed to fragment part of the bone.

Finally, the bone-fragmenting teeth can be positioned so that they are orthogonal to the axis X of the device 1.

## Claims

1. A bio-compatible device (1) for dental bone implantation for anatomical restoration, designed to be inserted in a dental alveolus located on a mandibular or maxillar bone, comprising a distal part (2), a substantially cylindrical central body (4) and a mesial part (3), a plurality of transverse grooves (5a) and one or more longitudinal notches (7) for bone reconstruction developing substantially in a direction of maximum length of said device (1), the device being **characterized in that** said plurality of transverse grooves (5a) are separated from one another by a plurality of bone-fragmenting teeth (5); said device (1) being in use pushed within said dental alveolus and subsequently rotated; said bone-fragmenting teeth (5) being designed to fragment part of said mandibular or maxillar bone.

2. The device according to Claim 1, in which said transverse grooves (5a) and said longitudinal notches (7) are designed to gather fragments of mandibular or maxillar bone broken by said bone-fragmenting teeth (5) during rotation of the device (1).

3. The device according to Claim 1, in which said bone-fragmenting teeth (5) extend substantially along one or more sectors of circumference (6) set around said central body (4); said sectors of circumference (6) being set apart from one another by a respective longitudinal notch (7).

4. The device according to Claim 2, in which said longitudinal notches (7) extend at least in part along said central body (4).

5. The device according to Claim 1, in which said distal part (2) is shaped like a truncated cone with a rounded tip.

6. The device according to Claim 1, in which said distal part (2) has a pointed conical shape.

7. The device according to Claim 1, in which said mesial area (3) moreover comprises a part (3b) extending in use on the outside of a peri-osteal line (10); said part (3b) being designed to carry out the anatomical reconstruction of a missing tooth (11).

8. The device according to Claim 7, in which said mesial area (3) moreover comprises a surface (3c) carrying within it means (3d) designed to enable insertion of instruments for rotation of the device (1) and to enable fixing of said tooth (11).

9. The device according to Claim 1, in which said bone-fragmenting teeth (5) are oriented not orthogonal to an axis X of the device (1); said non-orthogonal orientation of said teeth (5) being designed to favour a penetration to a greater depth of the device during a rotation.

10. A method for dental bone implantation for anatomical restoration via a device (1), designed to be inserted in a dental alveolus located on a mandibular or maxillar bone and comprising a distal part (2), a substantially cylindrical central body (4), and a mesial part (3), a plurality of transverse grooves (5a) and one or more longitudinal notches (7) for the bone reconstruction developing substantially in a direction of maximum length of said device (1), said method being **characterized in that** it envisages implantation of said device (1) within said dental alveolus and subsequent rotation of said device (1) enabling said bone-fragmenting teeth (5) to fragment part of said mandibular or maxillar bone.

11. The method according to Claim 10, in which fragments of mandibular or maxillar bone broken by said bone-fragmenting teeth (5) during rotation of the device (1) are gathered in said transverse grooves (5a) and said longitudinal notches (7).
